# EUROPEAN PATENT SPECIFICATION

(11) **EP 1 529 597 B1**
(45) Date of publication and mention of the grant of the patent: **13.06.2007**
(21) Application number: 03380258.8
(22) Date of filing: 05.11.2003
(51) Int. Cl.: B23Q 1/54, B23Q 17/22, B25J 17/02, B25J 9/10

(54) **Mechanism for univocally linking a shiftable and orientable platform to a support structure using articulated arms**
Vorrichtung zur Verbindung einer verschiebbaren und drehbaren Auflage zu einer Grundstruktur mittels gelenkigen Armen
Méchanisme pour lier univoquement une plateforme en translation et rotation à une structure de support, au moyen de bras articulés

(43) Date of publication of application: 11.05.2005
(73) Proprietor: SENER, INGENIERIA Y SISTEMAS, S.A., E-48930 Las Arenas Guecho (Vizcaya) (ES)
(72) Inventor: Urgoiti Bolumburu, Eduardo, 48010 Bilbao (ES)
(74) Representative: Davila Baz, Angel

(56) References cited:
- WO-A-99/38646
- DE-A- 19 840 886
- DE-U- 20 209 440
- US-A- 4 976 582
- US-A- 5 333 514
- US-A- 5 847 528
- US-A- 6 047 610

## Description

and The present invention refers to a mechanism for univocally linking a shiftable and orientable platform to a support structure, according to the preamble of claim 1, with a certain number of translational and rotational degrees of freedom, especially with six degrees of freedom, three translations and three rotations (see, for example, US-5,333,514-A).

The mechanism of the invention can be designed either as a drive means for shifting and/or orienting the platform with regard to the support structure, or as a sensor means for measuring the shift or orientation of the platform with regard to the support structure.

The mechanism of the invention is of the type constituted by a series of actuating arms, preferably six, articulated at one end to the platform and at the other end to an independent drive mechanism for each arm.

The most common commercial use of mechanisms of the type set forth is in simulators, both in pilot training installations or facilities as well as in amusement parks and cinemas with movement.

This type of mechanisms is also applicable in the orientation of earth dish antennas, orientation and positioning of telescopes in the International Space Station, position and orientation adjustment of optic elements in earth telescopes, sample orientation laboratory equipment, space vehicle docking mechanisms, etc.

Other applications which are still in a development phase are machine tools, high precision or laser surgery, etc.

Among the mechanisms of the type set forth, the Stewart platform can be mentioned as the most widely known. It comprises six variable-length rods connected at one end to a platform fixed at as many other points, whereas at the opposite end, they are connected to the movable platform at six other independent points. The connections can be of a ball-and-socket or cardan-type joint. The position of the points of attachment of the rods to the fixed and movable platforms must meet certain requirements for providing stability to the assembly. The length variation of the different rods causes the movement of the movable platform or, in turn, the movement of the movable platform causes the length variation of the rods. The drawback of this platform is that it uses linear actuators (or position sensors) more complicated than rotating actuators. Furthermore, the actuators move with the mechanism, such that their electric connection must be carried out through links rotating in several directions, which complicates the guiding of the cables.

Another mechanism of the type set forth is disclosed in WO 99/38646, which is composed of six actuating arms articulated at one end to the platform by means of balls-and-sockets, and at the other end to an independent drive mechanism for each arm, also with a ball-and-socket. Each independent mechanism is composed by a drive arm of an equal length in all the mechanisms, which is connected at one of its ends to a central shaft, around which all the arms can rotate. At the opposite end, these motor-driven arms can move circumferentially around the support structure. All the drive arms in this mechanism are connected to the central spin shaft, such that there is a space in the support structure occupied by the drive arms and the central spin shaft.

The object of the present invention is a mechanism of the type set forth, in which each drive mechanism includes a rotating motor or sensor, with the advantage this implies with regard to the linear actuators or sensors.

Another object of the invention is a mechanism of the type set forth, in which the drive mechanisms occupy practically no space whatsoever on the support structure, leaving more free space thereon for other purposes.

These and other objectives and advantages are obtained with the mechanism of the invention, as defined in claim 1.

The mechanism of the invention will preferably be composed by an even number of arms, for example six, these arms being grouped in pairs, which are connected to the movable platform at points close to one another in each pair.

With the constitution disclosed, linear movement elements are replaced with rotating movement elements. These rotating elements, either motors or sensors, are fixed to the support structure, whereby the guiding of the cables is simpler.

A further advantage of the mechanism of the invention is that it allows the serial actuation of several equal mechanisms through a common transmission.

Additionally, the mechanism of the invention has the following advantages over the mechanisms of the known type:
- It allows the use of standard rotating elements without the restriction thereof on a common shaft.
- It allows the arrangement of a free central volume in the mechanism, which can be arranged concentrically to said volume.
- It allows the choice of a greater range of ratios between the lengths of the different arms, adapting to different precision or reach capabilities.
- It allows the arrangement of the joints of the arms to the movable platform at physically separated points, simplifying the design thereof.

On the other hand, the capabilities of the mechanism of the invention in range of actuation, resolution, rigidity, load capacity, etc., may vary by modifying different parameters of its design, although maintaining the same configuration. Thus:
- The spin shaft of the sensor actuating elements can be arranged perpendicular to the axis of the base or parallel to it.
- The lengths and proportions of the bases and of the different arms can be varied to modify the motion range and precision
- The position of the rotating elements in the base and the position of the joints of the actuating arms to the platform can be selected, according to the features intended to be achieved.

The constitution and advantages set forth will be better understood with the following description, made with reference to the attached drawings, wherein a nonlimiting embodiment is shown.

In the drawings:
Figure 1 schematically shows the mechanism of the invention.
Figure 2 shows a schematic perspective view of a mechanism constituted according to the invention, applied for shifting and/or orienting a platform with regard to a support structure.
Figure 3 shows a schematic sectional view of an arm of the mechanism of figure 2, taken in a position in which an actuating arm, the corresponding drive arm and the shaft of the associated motor are on the same plane.
Figure 4 shows a perspective view of three consecutive positions of the mechanism in a translation of the platform, perpendicular to the support structure.
Figure 5 shows views similar to figure 4, which shows three consecutive positions corresponding to a translation of the platform parallel to the base.
Figure 6 shows a schematic perspective view of three successive positions corresponding to a rotation of the platform on an axis parallel to the support structure.
Figure 7 shows a view similar to figures 3 to 5, which shows three relative positions of one rotation of the platform with regard to a axis perpendicular to the support structure.

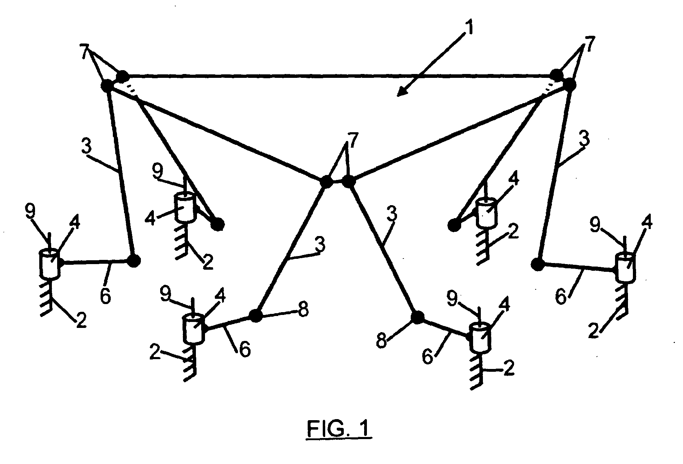

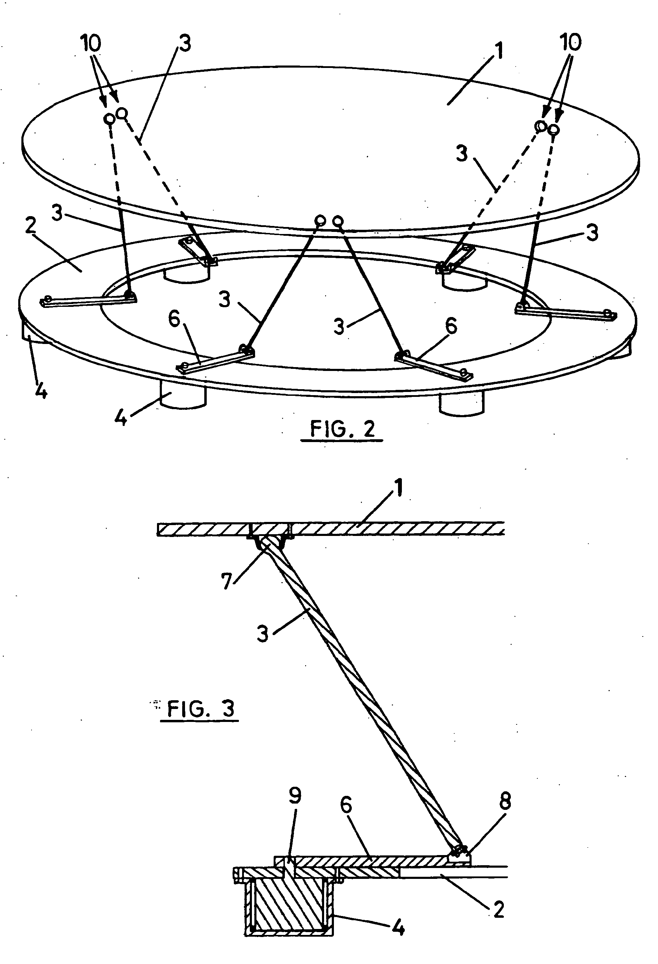

Figures 1 and 2 schematically show perspective views of a mechanism constituted according to the invention, for shifting and/or orienting a platform 1 with regard to a support structure 2.

Said mechanism is constituted by a series of actuating arms, six in the example shown in the drawing, referenced with number 3, which are articulated at one end to the platform 1, whereas at the opposite end, they are coupled to an independent drive mechanism for each arm, constituted by a rotating motor 4 fixed to the platform and a solidly-fixed drive arm 6 of the shaft of the corresponding motor 4.

As can be seen better in figure 3, each actuating arm 3 is articulated to the platform by means of a ball-and-socket 7. It is articulated to the corresponding drive arm 6 by means of a ball-and-socket 8 or by means of a cardan joint. For its part, the drive arm 6 is fixed perpendicularly at its free end to the shaft 9 of the motor 4, a motor which is solidly fixed to the support structure 2.

The joint 8 will be a ball-and-socket joint if there is no need to restrict the rotation of the actuating arms 3 around its own axis.

With the constitution shown in figures 1 and 2, movement in six degrees of freedom is obtained for the platform 1 by means of the coordinated rotation of the rotating motors 4, instead of the linear motors used in traditional mechanisms. The mechanism of the invention can also be used for knowing the position of the platform by measuring the rotations of the rotating elements 4.

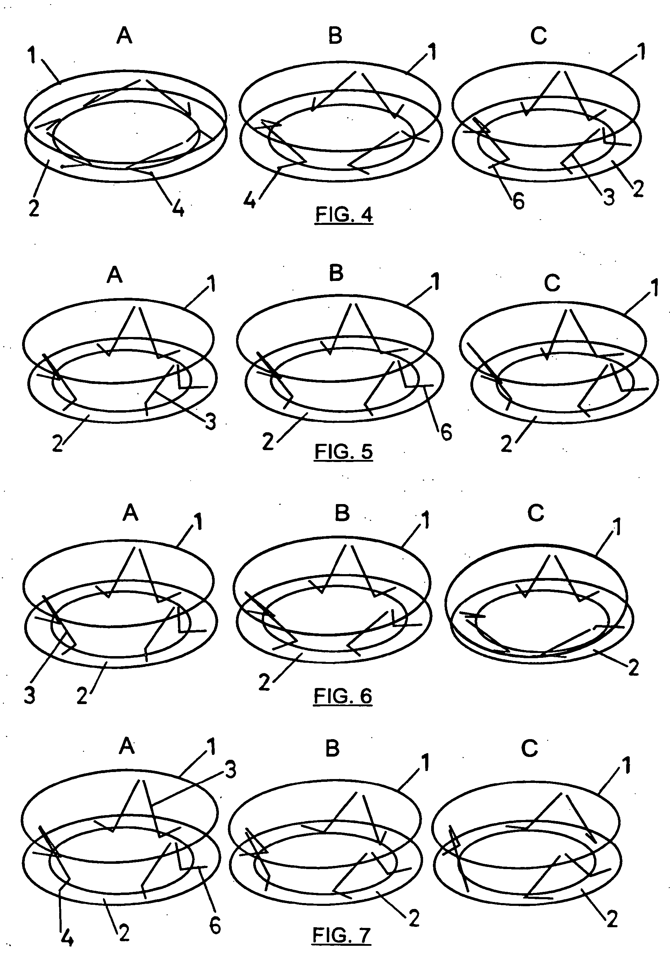

As can be seen in figure 4, by means of the coordinated actuation of the rotating motors 4, translation of the base 1 with regard to the support structure 2, in a direction perpendicular to said structure, can be obtained. Positions A, B and C show the translation or separation of the platform 1 with regard to the base structure 2 in said direction. Three consecutive positions A, B and C are also included in figure 5, which shows consecutive translations of the platform 1 in a direction parallel to the support structure 2, such that said platform and structure are left separated an equal distance, a side slide or shift of the platform with regard to the structure occurs.

Figure 6 shows three relative positions of the platform 1 with regard to the support structure 2, in which a rotation of the platform 1 around a axis parallel to the structure 2 has occurred, i.e. the angle between the platform 1 and the structure 2 is changed.

Lastly, figure 7 shows six consecutive positions A, B and C corresponding to the rotation of the platform 1 around a axis perpendicular to the support structure 2, maintaining the distance between platform and structure, as well as the angle formed between them, during this constant movement.

The position at six degrees of freedom of the platform 1 with regard to the structure 2 is obtained by controlling the angular position of the six rotating elements 4. Figures 4 to 7 show the movement of the arms and their relation to different movements of the platform in different degrees of freedom. By means of the combination of the movements disclosed with reference to figures 4 to 7, any shift of the platform 1 with regard to the support structure 2 can be achieved.

As can be seen better in figure 2, the actuating arms 3 are connected to the platform 1 in pairs at points 10 located close to one another, but physically separated, in each pair of arms, whereby simplifying the design of these connections

As previously indicated, by modifying the length and proportions of the different arms, the range and precision of the movement of the platform 1 with regard to the structure 2 can be modified.

With all this, the capabilities of the mechanism of the invention can be varied by modifying certain parameters of the design, although maintaining the constitution already disclosed.

As can be seen in figure 2, a free central volume is provided between the support structure 2 and the platform 1, allowing complete freedom of movement of said platform.

If the mechanism of the invention is applied as a sensor, the motors 4 will be replaced by rotating sensors, by means of which the angle of the shift or orientation of the platform 1 with regard to the support structure 2 will be detected and measured.

## Claims

1. A mechanism for univocally linking a shiftable and orientable platform to a support structure, comprising a series of actuating arms (3) which are articulated at one end to the platform (1) by means of a ball-and-socket (7), and at the other end to an independent drive mechanism for each arm by means of a ball-and-socket (8) or cardan joint, whereby each drive mechanism is composed of a rotating element (4) fixed to the support structure (2), and of a drive arm (6) fixed at one end perpendicularly to the shaft (9) of the rotating element (4), whereas at the opposite end, it is articulated to the corresponding actuating arm (3), all the rotating elements being distributed circumferentially around one another in the support structure (2) **characterized in that** the shafts (9) of the rotating elements (4) run in a direction parallel to the axis of the support structure (2), all the drive arms (6) being located on the same plane, perpendicular to said shafts.

2. - A mechanism according to claim 1, **characterized in that** the rotating elements (4) consist of motors causing the shift and/or orientation of the platform (1) with regard to the support structure (2).

3. - A mechanism according to claim 1, **characterized in that** the rotating elements (4) are angle-measuring elements defining the shift and/or orientation of the platform (1) with regard to the support structure (2).

4. - A mechanism according to claim 1, **characterized in that** it comprises an even number of actuating arms (3), preferably six, which are grouped in pairs connected to the movable platform at points (7) close to one another, in each pair.

## Patentansprüche

1. Mechanismus zum eindeutigen Verbinden einer verschiebbaren und ausrichtbaren Plattform mit einer Tragkonstruktion, umfassend eine Reihe von Stellarmen (3), die an einem Ende mittels eines Kugelzapfens (7) an der Plattform (1) angelenkt sind und am anderen Ende mittels eines Kugelzapfens (8) oder Kardangelenks an einem unabhängigen Antriebsmechanismus für jeden Arm angelenkt sind, wobei jeder Antriebsmechanismus aus einem Rotationselement (4), das an der Tragkonstruktion (2) befestigt ist, und einem Antriebsarm (6) besteht, der an einem Ende senkrecht zu der Welle (9) des Rotationselements (4) befestigt ist, während er am entgegengesetzten Ende an dem entsprechenden Stellarm (3) angelenkt ist, wobei alle Rotationselemente umfänglich um einander herum in der Tragkonstruktion (2) verteilt sind, **dadurch gekennzeichnet, dass** die Wellen (9) der Rotationselemente (4) in einer Richtung parallel zu der Achse der Tragkonstruktion (2) verlaufen, wobei alle Antriebsarme (6) in derselben Ebene, senkrecht zu den Wellen, angeordnet sind.

2. Mechanismus nach Anspruch 1, **dadurch gekennzeichnet, dass** die Rotationselemente (4) aus Motoren bestehen, welche die Verschiebung und/oder Ausrichtung der Plattform (1) relativ zu der Tragkonstruktion (2) veranlassen.

3. Mechanismus nach Anspruch 1, **dadurch gekennzeichnet, dass** die Rotationselemente (4) Winkelmesselemente sind, welche die Verschiebung und/oder Ausrichtung der Plattform (1) relativ zu der Tragkonstruktion (2) definieren.

4. Mechanismus nach Anspruch 1, **dadurch gekennzeichnet, dass** er eine gerade Anzahl von Stellarmen (3), bevorzugt sechs, umfasst, die zu Paaren gruppiert sind, die mit der beweglichen Plattform an Punkten (7) nahe zueinander in jedem Paar verbunden sind.

## Revendications

1. Mécanisme pour lier de façon univoque une plate-forme déplaçable et orientable à une structure de support, comprenant une série de bras actionneurs (3) qui sont articulés au niveau d'une extrémité sur la plate-forme (1) au moyen d'une rotule sphérique (7), et au niveau de l'autre extrémité sur un mécanisme d'entraînement indépendant pour chaque bras au moyen d'une rotule sphérique (8) ou d'un joint à cardan, moyennant quoi chaque mécanisme d'entraînement se compose d'un élément rotatif (4) fixé à la structure de support (2), et d'un bras d'entraînement (6) fixé au niveau d'une extrémité perpendiculairement à l'arbre (9) de l'élément rotatif (4), tandis qu'au niveau de l'extrémité opposée, il est articulé sur le bras actionneur correspondant (3), tous les éléments rotatifs étant distribués de façon circonférentielle les uns autour des autres dans la structure de support (2), **caractérisé en ce que** les arbres (9) des éléments rotatifs (4) fonctionnent dans une direction parallèle à l'axe de la structure de support (2), tous les bras d'entraînement (6) étant positionnés sur le même plan, perpendiculaires auxdits arbres.

2. Mécanisme selon la revendication 1, **caractérisé en ce que** les éléments rotatifs (4) sont constitués de moteurs entraînant le déplacement et/ou l'orientation de la plate-forme (1) par rapport à la structure de support (2).

3. Mécanisme selon la revendication 1, **caractérisé en ce que** les éléments rotatifs (4) sont des éléments de mesure d'angle définissant le déplacement et/ou l'orientation de la plate-forme (1) par rapport à la structure de support (2).

4. Mécanisme selon la revendication 1, **caractérisé en ce qu'**il comprend un nombre pair de bras actionneurs (3), de préférence six, qui sont groupés en paires reliées à la plate-forme mobile au niveau de points (7) l'un près de l'autre dans chaque paire.
